# FASCICULE DE BREVET EUROPEEN

(11) **EP 1 570 610 B1**
(45) Date de publication et mention de la délivrance du brevet: **14.02.2007**
(21) Numéro de dépôt: 03799722.8
(22) Date de dépôt: 12.12.2003
(51) Int. Cl.: H04L 12/56, H04Q 7/22

(54) **SYSTEME DE SELECTION ALTERNEE DE CANAUX VOIX ET DONNEES**
SYSTEM ZUR WECHSELSEITIGEN AUSWAHL VON SPRACH- UND DATENKANÄLEN
ALTERNATING DATA AND VOICE CHANNEL SELECTION SYSTEM

(30) Priorité: 12.12.2002 FR 0215744
(43) Date de publication de la demande: 07.09.2005
(73) Titulaire: Bouygues Telecom, 92100 Boulogne Billancourt (FR)
(72) Inventeur: BERNARD, Samuel, F-75005 Paris (FR); DUCLOS, Françoise, F-78140 Velizy (FR)
(74) Mandataire: Breese, Pierre
(86) Numéro de dépôt international: PCT/FR2003/050166
(87) Numéro de publication internationale: WO 2004/056050

(56) Documents cités:
- EP-A- 1 096 813
- EP-A- 1 161 036
- FR-A- 2 824 935
- US-A- 5 745 695
- US-A1- 2002 122 401

## Description

La présente invention se rapporte au domaine des télécommunications mobiles numériques.

La présente invention se rapporte plus particulièrement à un système de sélections alternées de canaux voix et données dans les communications entre un terminal mobile et un équipement complémentaire. Le contexte de chacun des canaux est enregistré dans une base de données numérique de l'équipement complémentaire. Les terminaux GPRS de classe A n'étant pas encore disponibles, ce système permet d'accéder à des fonctions multimédias exigeant la gestion alternée de canaux voix et données avec un terminal GPRS de classe B. Un terminal mobile GPRS de classe A permet d'être simultanément en communication sur le service GPRS et sur d'autres services GSM en mode circuit alors qu'un terminal mobile GPRS de classe B ne permet pas de transmettre simultanément des communications en mode circuit GSM et en mode paquet GPRS. Le système conforme à l'invention permet par exemple la commande du téléchargement de fichiers multimédias au moyen d'une plate-forme de reconnaissance vocale.

L'art antérieur connaît déjà, par la demande de brevet PCT WO 01/25566, une version simplifiée d'une station mobile de classe A GPRS/EDGE qui comprend l'émission et la réception de données GPRS/EDGE pendant des modes d'émission et de réception discontinus sur un canal de trafic réservé, et qui inclut un mécanisme destiné à la transmission en continu de données GPRS/EDGE vers un canal à commutation par paquet ou en provenance de ce dernier, ainsi que l'association optionnelle d'une fenêtre vocale avec une ou plusieurs fenêtres de données GPRS/EDGE. Les paquets de données GPRS/EDGE et les données vocales à commutation de circuit sont émis simultanément via un canal de trafic vocal GSM réservé par l'émission des paquets de données GPRS/EDGE entre les survenues de données vocales à commutation par paquet et de données de trame de descripteur de silence via un canal de trafic vocal réservé.

L'art antérieur connaît également, par la demande de brevet américain US 5745695, un procédé de fonctionnement d'un système radio avec des capacités de transmission de données, comme par exemple un système radio cellulaire GSM avec la fonctionnalité GPRS qui comprend la possibilité de suspendre le service de données en restant connecté au système et de signaler à partir d'une station distante vers un noeud de support du service données via un sous-système de station de base que le service données est suspendu. D'un autre point de vue, les données sont échangées à travers un canal de données pendant des premières périodes de temps et l'échange de données s'arrête pendant des secondes périodes de temps intermittentes pendant les premières périodes de temps. Pendant les premières périodes de temps, des requêtes d'appel communiquées sur le canal d'appel sont observées sur la station distante. Une requête de service non-données est identifiée sur le canal d'appel et le système répond à la requête d'appel du service non-données.

L'art antérieur connaît également, par la demande de brevet américain US 2002/0122401, un système et procédé dans un réseau de télécommunications sans fil pour mettre en attente un appel sortant de voix commuté par circuits entre une première partie et une seconde partie, et pour mettre en oeuvre une session de données commutée par paquets entre la deuxième partie et une troisième partie. Une interface Gs améliorée entre un SGSN (Serving GPRS Support Node) dans un réseau de commutation par paquets et un MSC (Mobile Switching Center) dans un réseau de commutation par circuits permet la transmission des messages qui permettent à la seconde partie de mettre la première partie en attente et d'accepter soit une session de données entrantes d'une troisième partie ou d'émettre une session de données vers une troisième partie. Quand la session de données est terminée, le MSC est notifié et l'appel voix est repris entre la première partie et la seconde partie.

L'art antérieur connaît également, par la demande de brevet européen EP 1 096 813 (Nokia), une méthode pour une première connexion pour la transmission de données à partir d'un terminal (MS) sur un réseau de télécommunication. Dans cette méthode, au moins une deuxième connexion pour la transmission de données est aussi mise en place entre ledit terminal (MS) et le réseau de télécommunication. Dans cette méthode, la première connexion pour la transmission de données est interrompue le temps de la deuxième connexion pour la transmission de données. De plus, dans cette méthode, un message pour maintenir la première connexion pour la transmission de données est installée sur le terminal MS en lien avec l'installation de la deuxième connexion pour la transmission de données. La génération dudit message pour maintenir la première connexion est initiée dans le terminal MS. document D1 présente dans sa description les caractéristiques des terminaux de classe B, qui ne peuvent pas utiliser en même temps des services GSM et GPRS. Par contre, des signaux du canal de contrôle du réseau GPRS peuvent être reçu pendant l'utilisation de GSM, et le document explique que, en pratique, un dispositif de classe B peut recevoir des messages pendant que GPRS est utilisé (par exemple un message signalant un appel entrant). Cependant, cette demande de brevet européen traite d'une problématique différente de celle de la présente invention. En effet, ce document s'intéresse au problème de l'arrêt définitif d'une transmission de données (par exemple GPRS) quand une autre connexion (par exemple GSM) est établie. Les données sont alors perdues quand la transmission est interrompue. Ainsi, ce document ne mentionne pas de sélection de canal actif (GSM ou GPRS), cette notion étant hors de sa problématique. La présente invention ne s'intéresse pas du tout à cette problématique. En effet, comme dans l'exemple de réalisation proposé, l'idée est d'abord de commander des données par la voix, puis de télécharger ces données. La gestion des canaux est ici une sélection alternée. Par ailleurs, cette demande de brevet européen ne mentionne nullement l'utilisation d'une base de données pour enregistrer le contexte d'un des canaux.

L'art antérieur connaît également, par la demande de brevet européen EP 1 161 036 (Nokia), une méthode pour gérer l'état en suspens d'un service en mode paquet dans un système comprenant un terminal MS et un équipement complémentaire, une connexion en mode paquet étant établie entre le terminal MS et l'équipement complémentaire. Le terminal et l'équipement complémentaire se transmettent alors des paquets de données. Le terminal (MS) n'est capable d'utiliser qu'un mode de connexion à la fois, paquet ou circuit. Quand le terminal MS passe dans l'état en suspens du mode paquet pour utiliser le mode circuit, un premier paquet prédéterminé est transmis du terminal à l'équipement complémentaire afin d'empêcher la transmission de paquets à partir de l'équipement complémentaire pendant l'état en suspens. L'invention se rapporte aussi à un terminal et à un logiciel. Notons qu'encore une fois, ce document traite de la problématique du passage des données GSM à GPRS (en particulier pour des terminaux de classe B). Il utilise un paquet de données prédéterminé pour empêcher la transmission des paquets. La présente invention ne s'intéresse pas du tout à cette problématique. En effet, comme dans l'exemple de réalisation proposé plus loin, l'idée est d'abord de commander des données par la voix, puis de télécharger ces données. La gestion des canaux est ici une sélection alternée. Cette demande de brevet européen ne mentionne nullement l'utilisation d'une base de données pour enregistrer le contexte du canal non actif.

L'art antérieur connaît également, par le brevet américain US 5 745 695 (Gilchrist Philip et al.), une méthode pour agir sur un système radio avec des capacités de gestion de données, par exemple un système radio cellulaire GSM avec des capacités GPRS. La méthode comprend la mise en suspens du service de données tout en restant logué au système et la signalisation à partir d'une station distante (terminal GSM) à un noeud de gestion des données que le service de données a été suspendu. Dans un autre aspect de l'invention, des données sont échangées sur un canal de données pendant des premiers intervalles de temps et l'échange de données sur le canal s'arrête durant des seconds intervalles de temps intercalés entre les premiers. Pendant les deuxièmes intervalles de temps, des messages communiqués via le canal de messagerie sont traités sur la station distante. Le message (ne faisant pas partie du service de données) est identifié sur le canal de messagerie et le système y répond. Notons qu'encore une fois, ce brevet américain traite de la problématique du passage des données GSM à GPRS (en particulier pour des terminaux de classe B) en utilisant le canal de messagerie. La présente invention ne s'intéresse pas du tout à cette problématique. En effet, comme dans l'exemple de réalisation proposé plus loin, l'idée est d'abord de commander des données par la voix, puis de télécharger ces données. La gestion des canaux est ici une sélection alternée. Ce document ne mentionne nullement l'utilisation d'une base de données pour enregistrer le contexte d'un des canaux.

La présente invention entend remédier aux inconvénients de l'art antérieur en proposant un procédé permettant de sélectionner de façon alternée, après l'établissement d'une session, un canal actif parmi un canal voix et un canal données en conservant les données relatives au canal non actif dans une base de données numérique. La présente invention ne nécessite pas de modifications particulières des réseaux GSM/GPRS. De plus, l'invention ne nécessite pas d'interface Gs pour pouvoir être mise en oeuvre.

Le document EP 1 096 813, dont le contenu a été précédemment décrit, enseigne l'ensemble des caractéristiques du préambule des revendications indépendantes 1 et 6.

Toutefois, le document EP 1 096 813 ne permet pas une transmission sélective de fichiers numériques vers un terminal mobile lors des sessions alternées voix/données.

Pour pallier les inconvénients de l'art antérieur, l'invention concerne un procédé conforme aux revendications 1 à 5, et un système conforme aux revendications 6 et 7.

On comprendra mieux l'invention à l'aide de la description, faite ci-après à titre purement explicatif, d'un mode de réalisation de l'invention, en référence aux figures annexées :

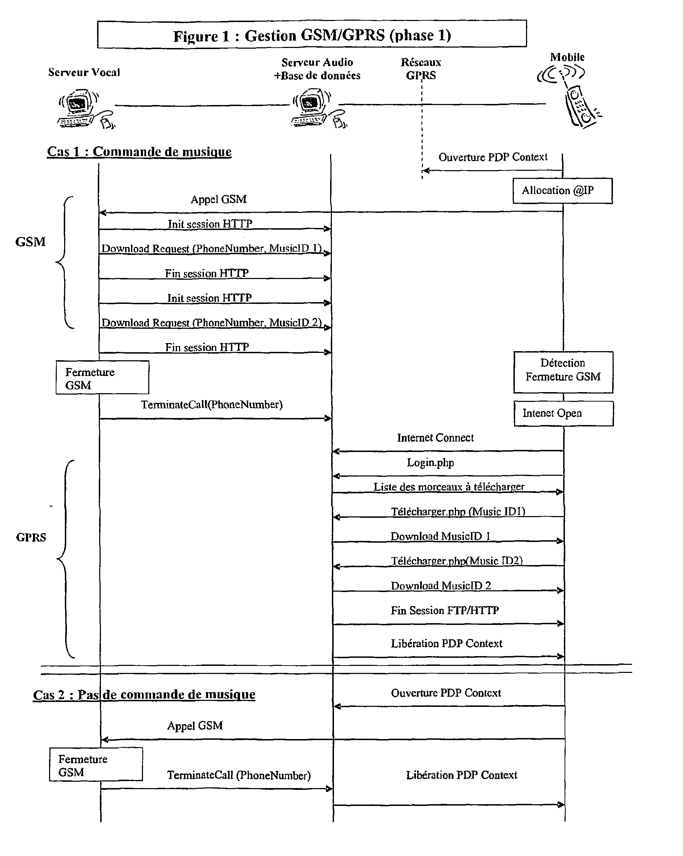

- la figure 1 représente la gestion des canaux GSM/GPRS pendant l'étape 1 ;

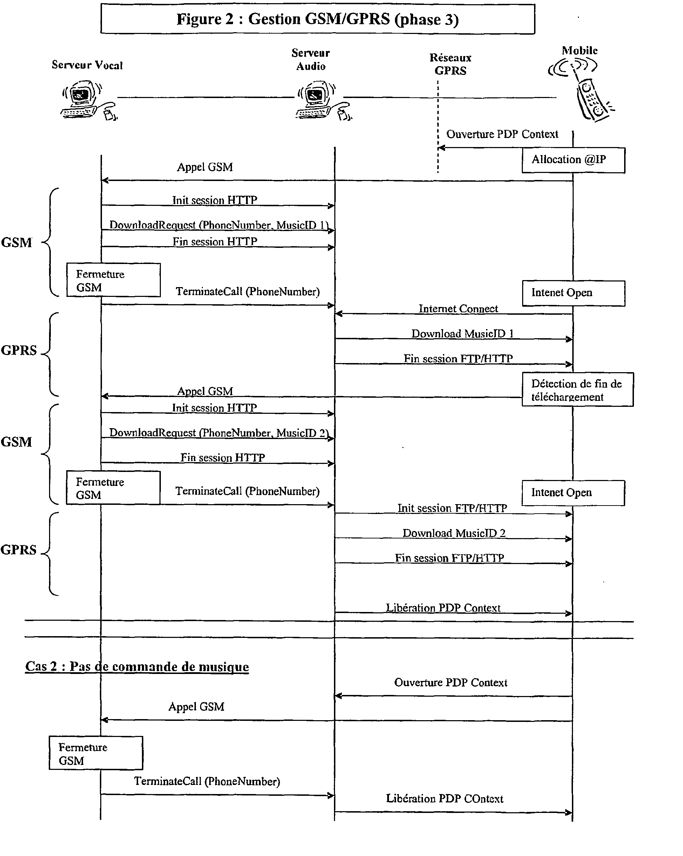

- la figure 2 représente la gestion des canaux GSM/GPRS pendant l'étape 3 ;
- la figure 3 illustre les couches du système conforme à l'invention ;

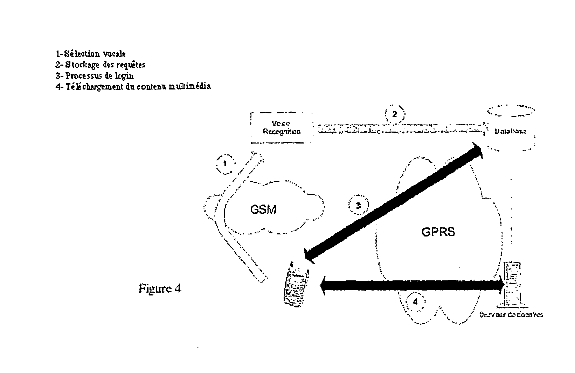

- la figure 4 représente un exemple de réalisation de l'invention ;

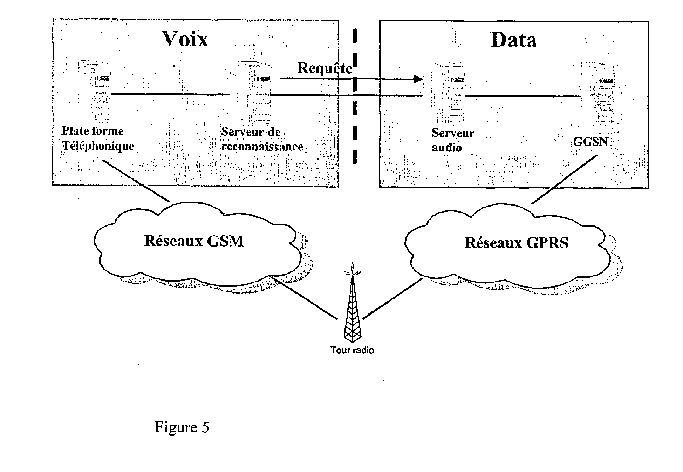

- la figure 5 représente un exemple de réalisation de l'invention.

On considère que le canal GSM est inactif lorsque le canal est libéré ou fermé, et on considère que le canal GPRS est inactif lorsque aucun paquet ne transite sur le canal.

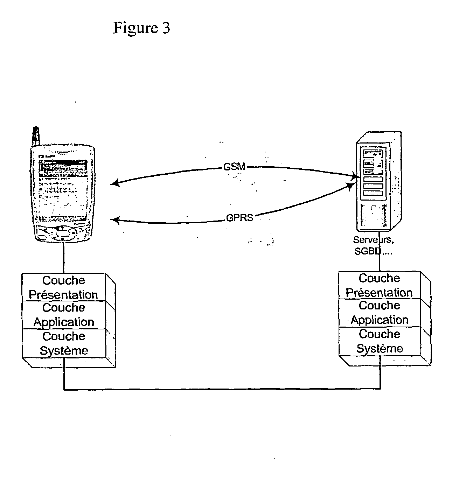

Les couches présentation, application et système sont représentées sur la figure 3.

La couche Présentation prend en compte :
- le site vocal (architecture du site, message d'apprentissage, habillage sonore).
- l'interface Homme-Machine de l'application sur le PDA (ergonomie, gestion de l'attente, passage voix/data).
- le format sonore (rendu, qualité après compression).

La couche Application regroupe :
- le serveur vocal (reconnaissance vocale, synthèse).
- la plate-forme téléphonique (gestion des appels téléphoniques).
- le site vocal.
- le serveur de contenu (fichiers audio, système de gestion de contenu).
- le SGBD Utilisateur.

Enfin, la couche Système réunit :
- la gestion des flux data et voix avec contexte voix et data actifs.
- la gestion du téléchargement vers le client (reprise sur erreur, déclenchement automatique).
- l'interconnexion des entités de la couche Application.

Si l'on se réfère à l'architecture du système, on trouve sur :
- Le serveur téléphonique : une carte téléphonique numérique chargée de réceptionner les appels GSM, il effectue la reconnaissance vocale.
- Le serveur de reconnaissance : il héberge le site vocal permettant de naviguer dans les différentes rubriques (pages vxml, fichiers audios pré-enregistrés et les grammaires)
- Le serveur audio : c'est un serveur web de musique connecté à une base de données qui gère les droits utilisateurs et mémorise les fichiers à télécharger pour chaque utilisateur.

Les terminaux GPRS présents sur le marché sont des terminaux de classe B. Cette classe permet d'initialiser le lien GPRS et de passer un appel GSM, cela est possible si aucune donnée ne transfère sur le lien GPRS.

Pour passer d'un canal à l'autre, l'application doit conserver les contextes de chacun des canaux pour chaque utilisateur. Cela se fait par le numéro MISDN et le numéro du site vocal.

Un contrôle doit être réalisé pour piloter le passage d'un canal à l'autre. Dans le cas du passage GSM->GPRS, c'est la détection de l'évènement de fermeture du canal qui autorise la circulation de données sur le canal GPRS. Pour le sens GPRS->GSM, c'est la détection de la fin de téléchargement qui autorise un nouvel appel GSM.

Pour effectuer le lien entre les canaux GSM et GPRS, des données doivent être enregistrées sur le terminal et la base de données du serveur audio :

Le programme de l'application cliente (le terminal) contient :
- le MSISDN
- le numéro du site vocal
- l'adresse IP du serveur audio

La Base de données du serveur audio contient :
- le MSISDN de chaque client

Après la fermeture du canal GSM, le terminal envoie au serveur audio une requête POST d'authentification contenant en attribut son MSISDN. Ce procédé permet au serveur audio d'identifier l'adresse IP du terminal. Le serveur audio et le terminal connaissent respectivement les adresses IP de chacun, la communication sur le canal GPRS est autorisée.

Chaque couche offre des interfaces pour celle qui la précède. La couche Application utilise la couche Système pour émettre les flux voix et data. La couche Présentation exploite la couche Application pour rendre accessible les contenus (site vocal, fichiers audio) à l'utilisateur. Ces interfaces vont se créer au fur et à mesure des étapes du projet qui sont les suivantes :
- Etape 1 : Navigation simple au sein du site vocal. L'utilisateur découvre les différents thèmes et écoute des extraits sonores. L'utilisateur choisit les musiques qu'il souhaite télécharger par activation d'une commande vocale. A l'issue de son choix, le canal GSM est fermé et le téléchargement débute.
- Etape 2 : Navigation puis push data (avec vérification des droits). L'utilisateur découvre les différents thèmes, écoute des extraits sonores et informe qu'il veut recevoir le morceau X quand il sera disponible.
- Etape 3 : Navigation et téléchargement asynchrones. L'utilisateur découvre les différents thèmes, écoute des extraits sonores, télécharge le fichier correspondant et se connecte à nouveau sur le site vocal.

Si l'on s'attarde à la gestion des flux à chaque étape, celle-ci se résume à :
- Etape 1 : Flux voix (GSM) et flux data (GPRS). Le contexte PDP (data) est activé avant l'appel voix afin de limiter le temps de transition entre la session voix et data. Le contexte voix n'est actif que pendant l'appel. Après, seul le contexte data est actif. Le point technique est la validation de l'architecture du prototype qui constitue la brique de base avant toute évolution.
- Etape 2 : Flux voix (GSM) et flux data (GPRS). Le contexte PDP (data) est activé après fermeture du canal GSM. Le contexte voix n'est actif que pendant l'appel. Après, seul le contexte data est actif. Le point technique est la faisabilité du push data par le réseau. Le réseau prend l'initiative d'envoyer le contenu au mobile au contraire de l'étape 1 où le mobile va chercher le contenu (pull).
- Etape 3 : Flux voix (GSM) et flux data (GPRS) asynchrones. Le début est le même que celui de l'étape 1, le changement venant de la possibilité dé réinitialiser un nouvel appel voix GSM lorsque le canal GPRS devient inactif.

Le démonstrateur vocal est réalisé sur l'idée d'un Juke-Box qui permettra de mettre en oeuvre les contextes de travail évoqués ci-dessus et de travailler sur des contenus musicaux optimisés pour le bas débit. Cette maquette demande la mise en place d'un serveur audio adapté au téléchargement de musique. Ce serveur sera couplé à la plate-forme vocale (plate-forme téléphonique, serveur vocal et site vocal). Le choix d'un format de compression et d'un player audio adapté sera requis.

L'invention est décrite dans ce qui précède à titre d'exemple. Il est entendu que l'homme du métier est à même de réaliser différentes variantes de l'invention sans pour autant sortir du cadre du brevet.

## Revendications

1. - Procédé de communication mobile multicanaux pour l'échange entre un terminal mobile et au moins un équipement complémentaire comprenant un serveur de fichiers numériques, de données numériques d'un premier type par un canal de transmission de la voix, et de données numériques d'un second type par un canal de transmission de données, un seul desdits canaux étant actif, ledit procédé comportant une étape d'établissement d'une session sur chacun des canaux et une alternance de sessions sur le canal de transmission de la voix et sur le canal de transmission de données, **caractérisé en ce qu'**il comporte des étapes de sélection alternée du canal actif, chaque étape où le canal actif est le canal de transmission de la voix comportant au moins une sous-étape d'enregistrement du contexte du canal non actif et d'un identifiant de fichier à télécharger depuis ledit serveur de fichiers numériques, dans une base de données numériques de l'équipement complémentaire, la même session du canal de transmission de la voix restant active pendant lesdites sous-étapes, et chaque étape où le canal actif est le canal de transmission de données comportant au moins une sous-étape de téléchargement vers ledit terminal mobile à partir dudit serveur de fichiers numériques d'au moins un fichier numérique dont l'identifiant a précédemment été enregistré dans ladite base de données numériques de l'équipement complémentaire.

2. - Procédé de communication selon la revendication 1, **caractérisé en ce que** le canal de transmission de la voix est conforme à la norme GSM.

3. - Procédé de communication selon la revendication 1 ou 2, **caractérisé en ce que** le canal de transmission de données est conforme à la norme GPRS.

4. - Procédé de communication selon la revendication 1, **caractérisé en ce qu'**il comporte une étape de reconnaissance vocale pour commander des fonctionnalités de l'équipement complémentaire à partir des données provenant du canal de transmission de la voix.

5. - Procédé de communication selon la revendication 4, **caractérisé en ce que** le système de reconnaissance vocale est une plate-forme VoiceXML.

6. - Système pour la mise en oeuvre du procédé de la revendication 1 du type comportant au moins un terminal de télécommunication et au moins un équipement complémentaire de télécommunication agencés pour permettre l'établissement d'une session et pour communiquer entre eux par un canal de transmission de la voix d'une part, et par un canal de transmission de données d'autre part, le terminal comportant des moyens de sélection pour l'activation d'un desdits deux canaux et d'inactivation de l'autre desdits canaux et l'équipement complémentaire comprenant un serveur de fichier de fichier numériques, **caractérisé par le fait que** ledit terminal mobile comporte des moyens pour transmettre sur ledit canal de transmission de la voix au moins un identifiant de fichier à télécharger depuis ledit serveur de fichiers numériques vers ledit terminal mobile par l'intermédiaire dudit canal de transmission de données, et que l'équipement complémentaire comporte une base de données numériques pour l'enregistrement temporaire du contexte du canal non actif et dudit identifiant.

7. - Système selon la revendication 6, **caractérisé en ce que** ledit serveur numérique de l'équipement complémentaire comprend au moins un serveur du groupe des serveurs de contenu multimédia, des serveurs de téléchargement de fichiers musicaux, des serveurs de paiement électronique, des serveurs de téléchargement de séquences vidéos, des serveurs de téléchargement de sonneries pour téléphones, des serveurs de téléchargement d'images ou de photos, des serveurs de téléchargement de jeux, des serveurs de téléchargement de textes, des serveurs de billetterie, les réservations étant effectués par téléchargement d'un billet.

## Claims

1. Multi-channel mobile communication method for exchanging digital data of a first type over a voice transmission channel, and digital data of a second type over a data transmission channel, only one of such channels being active, between a mobile terminal and at least one complementary piece of equipment comprising a digital file server, said method comprising a step of establishing a session on each of the channels and alternating sessions on the voice transmission channel and on the data transmission channel, **characterised in that** it comprises the steps of alternating selection of the active channel, each step in which the active channel is the voice transmission channel comprising at least one sub-step of saving the context of the inactive channel and an identifier of the file to be downloaded from said digital file server in a digital database of the complementary piece of equipment, the same session of the voice transmission channel remaining active during said sub-steps, and each step in which the active channel is the data transmission channel comprising at least one sub-step of downloading at least one digital file whose identifier has previously been saved in said digital database of the complementary piece of equipment to said mobile terminal from said digital file server.

2. Communication method according to claim 1, **characterised in that** the voice transmission channel conforms to the GSM standard.

3. Communication method according to claim 1 or 2, **characterised in that** the data transmission channel conforms to the GPRS standard.

4. Communication method according to claim 1, **characterised in that** it comprises a step of voice recognition for controlling the functions of the complementary piece of equipment using data coming from the voice transmission channel.

5. Communication method according to claim 4, **characterised in that** the voice recognition system is a VoiceXML platform.

6. System for implementing the method of claim 1 of the type comprising at least one telecommunications terminal and at least one piece of complementary equipment arranged to make it possible to establish a session and to communicate with each other by means of the voice transmission channel on the one hand, and the data transmission channel on the other hand, the terminal comprising selection means for activating one of said two channels and for deactivating the other one of said channels, and the complementary equipment comprising a digital file server, **characterised by** the fact that said mobile terminal comprises means for transmitting over said voice transmission channel at least one file identifier to be downloaded from said digital file server onto said mobile terminal by means of said data transmission channel, and that the complementary piece of equipment comprises a digital database for temporarily saving the context of the inactive channel and of said identifier.

7. System according to claim 6, **characterised in that** said digital server of the complementary equipment comprises at least one server from the group of multimedia-content servers, servers for downloading music files, electronic payment servers, servers for downloading video sequences, servers for downloading ringtones, servers for downloading images or photos, servers for downloading games, servers for downloading text, ticketing servers, the reservations being placed by downloading a ticket.

## Patentansprüche

1. - Verfahren zur mobilen Kommunikation mit mehreren Kanälen für den Austausch zwischen einem mobilen Terminal und mindestens einer zusätzlichen Ausrüstung, die einen Server für digitale Dateien umfaßt, mit digitalen Daten einer ersten Art durch einen Kanal für die Stimmübertragung und digitale Daten einer zweiten Art durch einen Kanal für die Datenübertragung, wobei ein einziger der besagten Kanäle aktiv ist, wobei das besagte Verfahren eine Phase des Aufbaus einer Verbindung auf jedem der Kanäle und eine Wechselfolge der Verbindungen auf dem Kanal für die Sprachübertragung und auf dem Kanal für die Datenübertragung umfaßt, **dadurch gekennzeichnet, daß** es Phasen der abwechselnden Wahl des aktiven Kanals umfaßt, wobei jede Phase, wo der aktive Kanal der Kanal für die Sprachübertragung ist, mindestens eine Subphase für die Aufzeichnung des Zusammenhangs des nicht aktiven Kanals umfaßt und einer Kennung der ab dem Server der digitalen Dateien fernzuladenden Datei in eine digitalen Datenbank der zusätzlichen Ausrüstung, wobei die gleiche Verbindung des Kanals für die Stimmübertragung während diesen besagten Subphasen aktiv bleibt, und jede Phase, wo der aktive Kanal der Kanal für die Datenübertragung ist, mindestens eine Subphase der Fernladung zu besagtem mobilem Terminal ab dem besagten Server der digitalen Dateien mit mindestens einer digitalen Datei, deren Kennung vorher in der besagten digitalen Datenbank der zusätzlichen Ausrüstung aufgezeichnet worden ist.

2. - Verfahren zur Kommunikation nach Anspruch 1, **dadurch gekennzeichnet, daß** der Kanal der Stimmübertragung die Norm GSM erfüllt.

3. - Verfahren zur Kommunikation nach Anspruch 1 oder 2, **dadurch gekennzeichnet, daß** der Kanal der Datenübertragung die Norm GPRS erfüllt.

4. - Verfahren zur Kommunikation nach Anspruch 1, **dadurch gekennzeichnet, daß** es eine Phase der Stimmerkennung umfaßt, um Funktionen der zusätzlichen Ausrüstung ab den Daten zu steuern, die vom Kanal der Stimmübertragung kommen.

5. - Verfahren zur Kommunikation nach Anspruch 4, **dadurch gekennzeichnet, daß** das System der Stimmerkennung eine VoiceXMLL Plattform ist.

6. - System für den Einsatz des Verfahrens des Anspruchs 1 des Typs, der mindestens ein Telekommunikations-Terminal und mindestens eine zusätzliche Telekommunikations-Ausrüstung umfaßt, die so gestaltet sind, daß sie den Aufbau einer Verbindung erlauben und damit sie miteinander durch einen Kanal für die Stimmübertragung einerseits und durch einen Kanal für die Datenübertragung andererseits kommunizieren, wobei das Terminal Wahlmittel für die Aktivierung eines der besagten beiden Kanäle umfaßt und zur Inaktivierung des anderen der besagten Kanäle, und wobei die zusätzliche Ausrüstung einen Dateiserver für digitale Dateien umfaßt, **dadurch gekennzeichnet, daß** das besagte mobile Terminal Mittel umfaßt, um auf dem besagten Kanal für die Stimmübertragung mindestens eine Kennung der Datei zu übertragen, die ab dem besagten Digitaldateiserver an das besagte mobile Terminal über den besagten Kanal für die Datenübertragung ferngeladen werden soll, und daß die zusätzliche Ausrüstung eine digitale Datenbank für die vorübergehende Aufzeichnung des Zusammenhangs des nicht aktiven Kanals und der besagten Kennung umfaßt.

7. - System nach Anspruch 6, **dadurch gekennzeichnet, daß** der besagte digitale Server der zusätzlichen Ausrüstung mindestens einen Server der Gruppe der Server mit Multimedia-Inhalt umfaßt, Server für die Fernladung von Musikdateien, Server für die elektronische Bezahlung, Server für die Fernladung von Videofolgen, Server für die Fernladung von Klingeltönen für Telefonapparate, Server für die Fernladung von Bildern oder Fotos, Server für die Fernladung von Spielen, Server für die Fernladung von Texten, Server für den Kartenvorverkauf, wobei die Reservierungen durch Fernladung eines Fahrscheins durchgeführt werden.
